# EUROPEAN PATENT APPLICATION

(11) **EP 2 136 278 A1**
(43) Date of publication of application: **23.12.2009**
(21) Application number: 08010899.6
(22) Date of filing: 16.06.2008
(51) Int. Cl.: G05D 23/13

(54) **Thermostatic mixer**

(71) Applicant: Nobili, Fabrizio, 6534 San Vittore (CH)
(72) Inventor: Nobili, Fabrizio, 6534 San Vittore (CH)
(74) Representative: Zardi, Marco

(57) **Abstract**

Thermostatic mixer (1) for showers and the like, comprising a hot water inlet (2) at a temperature T1, and a cold water inlet (3) at a temperature (T2), a mixed water outlet (4) at a temperature (TM). The thermostatic mixer (1) comprises a comparator (6) between the mixed water temperature (TM) and a preset temperature value (TP), and a hot and cold water mixer valve (5), electrically actuated by the comparator (6), to maintain the mixed water temperature (TM) identical to the preset temperature (TP).

## Description

### Field of application

The present invention refers to a thermostatic mixer for uses in the plumbing industry, for example for showers and the like, comprising a hot water inlet at a temperature T1, a cold water inlet at a temperature T2 and a mixed water outlet at a temperature TM.

The present invention also refers to a thermostatic mixing method for showers and the like which provides for receiving two separate flows of hot water, at a temperature T1, and cold water, at a temperature T2, and mixing the two flows into water mixed at a temperature TM.

### Prior art

As it is known, a thermostatic mixers for showers and the like comprises a pair of hot water and cold water inlets, respectively at a preset temperature T1 and T2, a mixed water outlet at a temperature TM and a thermostatic valve for maintaining the temperature TM of the mixed water constant, at a temperature value TP preset by the user.

In the known thermostatic mixers, the thermostatic valve comprises a deformable element which, which dilates upon the increase of the temperature TM reduces the supply of hot water through the respective inlet, and contracts upon the drop of the temperature TM, increasing such supply.

The thermostatic valve thus maintains the temperature of the mixed water TM, at value TP, regardless of the variation of the temperature T1 and/or T2 of the respective inflowing water.

According to the same principle of operation, the thermostatic valve maintains the temperature of the mixed water TP constant, upon the variation of a pressure P1 and/or P2 of the respective inflowing water, for example due to a malfunction of a sanitary installation for supplying hot and cold water.

In particular, the regulation of the thermostatic mixer, that is the setting of the temperature TM, is performed by operating manually on a graduated knob associated with the thermostatic mixer.

Thermostatic mixers of the abovementioned type have a serious drawback of being limited to the physical and mechanical properties of the deformable element which dilates and contracts only in a preset range of temperature values T1 and T2 and a preset range of pressures P1 and P2, for example, referring to a commonly known thermostatic mixer, when the hot water temperature is in the range of 70±4 °C, the cold water temperature is in the range of 15±4 °C, and the pressures at the respective inlets are in the range of 3±0.2 bars.

Furthermore, in order to avoid altering the operation of the thermostatic mixer even when the temperatures and pressures are within the abovementioned parameters, gaskets and filters which prevent access of foreign bodies such as sand grains and/or rust particles into the thermostatic valve are provided, as well as a water softening machine mounted upstream of the inlets, to avoid clogging or damaging the deformable element. Such solutions considerably complicate the structure of the thermostatic valve and increase its cost.

A further drawback of the abovementioned thermostatic mixers consists in the non-instantaneous regulation of the temperature TM due to the reaction time of the deformable element which dilates or contracts quite slowly and only due to the physical and mechanical characteristics of the material used. Lastly, such thermostatic mixer is not sensible to small temperature and/or pressure variations given that the deformable element does not dilate or contract under such small variations.

The technical problem on which the present invention is based is that of providing a thermostatic mixer capable of operating regardless of the temperatures of the water supplied at the inlet and the respective pressures, such thermostatic mixer being extremely quick at detecting and subsequently regulating a variation of the temperature and particularly sensitive even to small temperature variations, as well as being particularly resistant, overcoming the drawbacks still affecting the thermostatic mixers according to the prior art.

### Summary of the invention

The solution idea on which the present invention is based is that of providing a thermostatic mixer comprising an electronic comparator between a temperature of the mixed water and a preset temperature value, and a mixer valve for the hot and cold water inlets, actuated electrically, to maintain the temperature of the mixed water equal to the preset temperature.

The thermostatic mixer comprises a pressure balancer, arranged upstream of the mixer valve, having two separate hot water and cold water inlets, supplied at different inlet pressures, and two separate outlets for such water at a same outflow pressure, hydraulically connected to the mixer valve.

Advantageously, the thermostatic mixer according to the present invention is capable of regulating the temperature of the mixed water substantially for any pressure and/or temperature value of the inflowing cold and hot water, and it is capable of performing such regulation in an extremely accurate manner, regulating the supply of the hot and cold water through the respective inlets by means of an electronically controlled opening of the mixer valve.

As an input, the comparator has a first value of mixed temperature TM detected by a temperature sensor and a second preset temperature value TP and a mixer valve actuation control as an output. Preferably, in input the comparator also has a pair of temperature values TA, TC detected through two respective hot and cold water temperature sensors, and calculates an expected value TMA of the mixed temperature TM depending on the pair of values TA, TC, before receiving the actual temperature value of the mixed temperature TM.

Advantageously, according to this preferred embodiment, the mixer according to the invention regulates the mixer valve very rapidly, even before the mixed water sensor detects the temperature TM of the water, given that the comparator electronically controls the opening and closing of the mixer valve depending on the temperature values of the hot and cold water detected upstream of the mixer valve itself, and sending to the comparator the expected value TMA of the mixed temperature TM.

Such expected value can be calculated in an extremely accurate manner given that the pressure of the hot and cold water is maintained constant by the pressure balancer.

According to such solution idea the technical problem is solved by a thermostatic mixer of the type previously indicated and defined by the characterising part of claim 1.

Further characteristics and advantages of the thermostatic mixer according to the present invention shall be clear from the description, provided hereinafter, of one of its embodiments given for indicative and non-limiting purposes with reference to the attached drawings.

### Brief description of the drawings

Figure 1 schematically represents a thermostatic mixer according to the present invention.
Figure 2 represents the thermostatic mixer of figure 1 comprising a pressure balancer.
Figure 3 represents schematically and more in detail, the pressure balancer of figure 2.

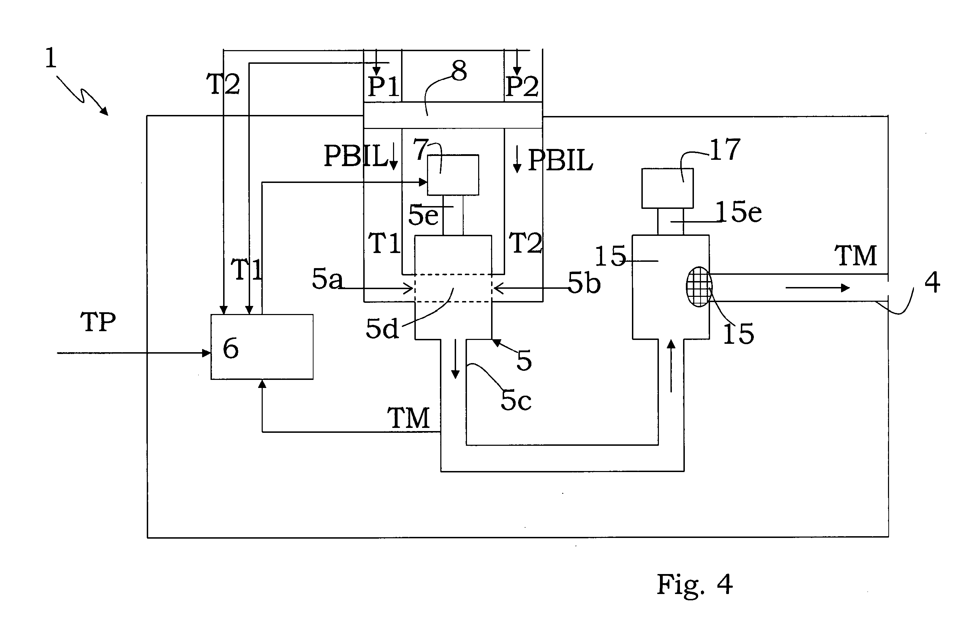

Figure 4 represents a variant embodiment of the thermostatic mixer of figure 1.
Figure 5 schematically represents the thermostatic mixer of figure 1 mounted in a kitchen installation.
Figure 6 represents the thermostatic mixer in a perspective view according to the present invention.
Figure 7 represents in a different perspective view the thermostatic mixer of figure 6.

### Detailed description

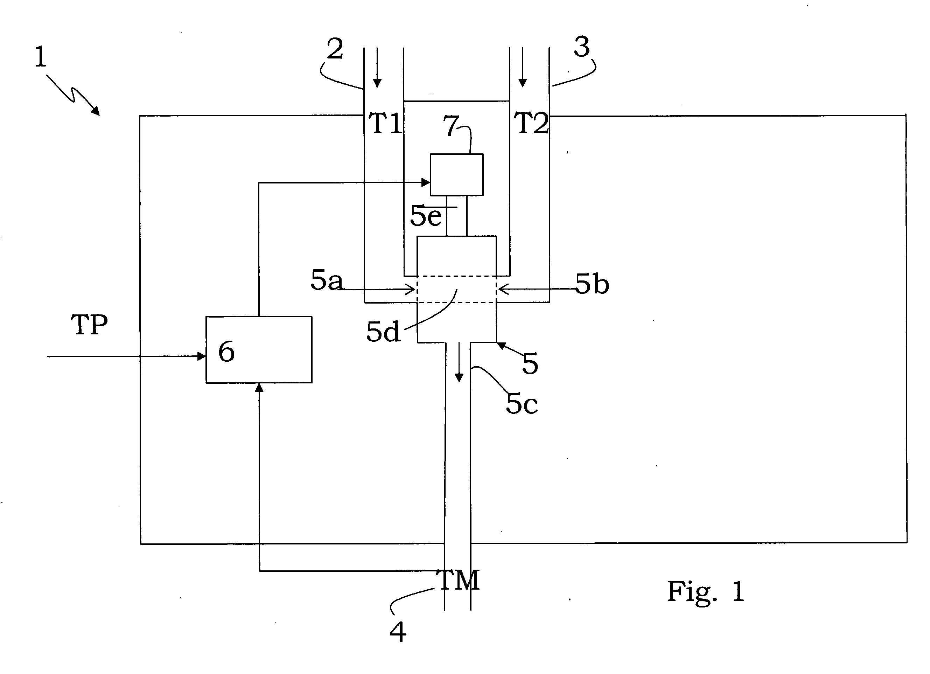

Referring to figure 1 schematically represented is a thermostatic mixer 1 for uses in the plumbing industry, for example for showers and the like, comprising a pair of hot and cold water inlets 2, 3, at respective and preset temperatures T1 and T2, a mixed water outlet 4 at a temperature TM and a mixer valve 5 for supplying water.

In particular, the mixer valve 5 comprises two separate hot and cold water inlets 5a, 5b, one or more hot water outlets 5c and an interceptor 5d interposed between the inlets 5a, 5b and the outlet 5c, and moveable between a first closure position at the hot water inlet 5a and a second closure position at the cold water inlet 5b.

According to the present invention, the thermostatic mixer 1 comprises a comparator 6 between the mixed water temperature value TM and a user selected temperature value TP, and motorised means 7 for operating the mixer valve 5, controlled by the comparator 6 for setting and maintaining the mixed water temperature at the preset value TP.

In particular, the comparator 6 is of the electronic type and it receives at the inlet the preset temperature TP and the mixed temperature value TM, set by the user by means of a digital keyboard or similar interface, and actuates the motorised means 7 which are coupled to a stem 5e of the mixer valve 5, in turn associated with the interceptor 5d.

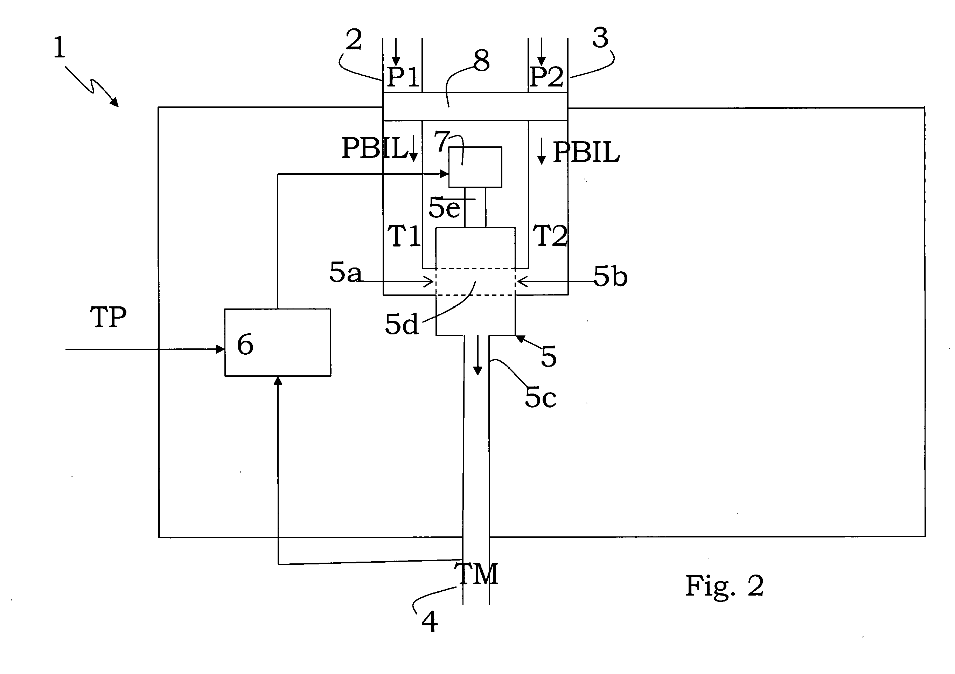

As schematically represented in figure 2, the thermostatic mixer 1 comprises a mechanical pressure balancer 8 arranged upstream of the mixer valve 5, comprising two hot and cold water inlets 9a and 9b and respective separate hot and cold water outlets 9c, 9d. The inlet 9a receives hot water at a preset temperature P1, the inlet 9b receives cold water at a preset pressure P2, for example greater than P1, and the outlets 9c, 9d separately release hot and cold water at the same pressure PBIL, substantially equivalent to the minimum value between P1 and P2.

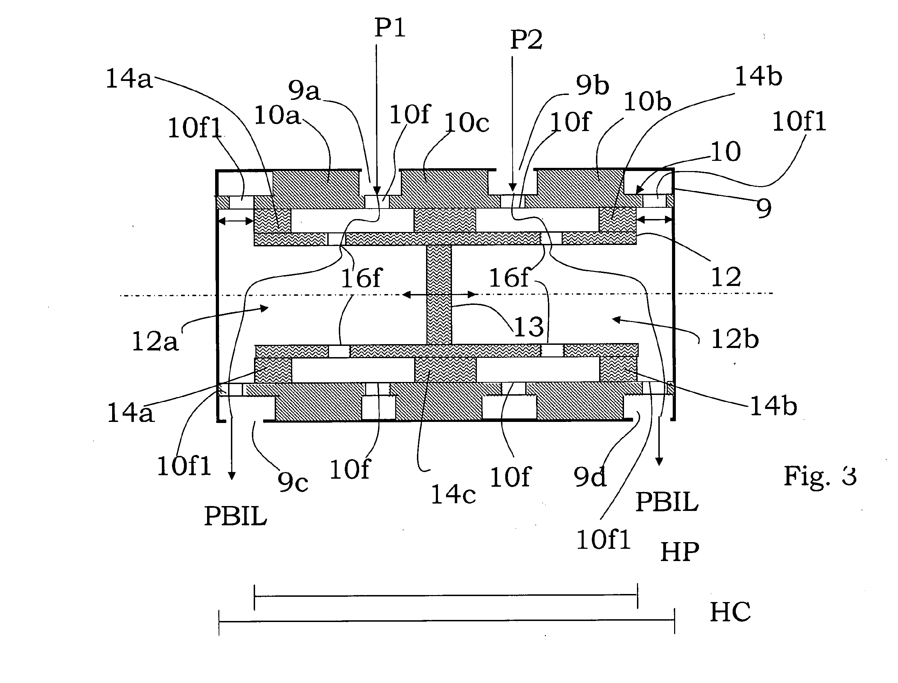

The pressure balancer 8, schematically represented in figure 3, comprises a substantially cylindrical body 9 formed in which are the hot and cold water inlets 9a, 9b and the outlets 9c, 9d, diametrically opposite to the inlets. Arranged in the body 9 is a hollow cylinder 10 of a preset height HC, externally provided with a central gasket 10c and with two intermediate concentric gaskets 10a, 10b, and it is inserted into the body 9 with all the sealing gaskets 10a, 10b, 10c on the internal surface of the body 9.

The balancer further comprises a piston 12 of the height HP<HC, comprising two axial cavities 12a, 12b separated by a central internal wall 13, an external central ring 14c and two opposite base rings 14a, 14b, and it is inserted into the hollow cylinder 10 in a sliding manner with all the rings 14 in contact with the internal surface of the hollow cylinder 10.

The surface of the cylinder is provided with holes 10f, 10fl and the surface of the piston 12 is provided with holes 16f. In particular the central holes 10f of the hollow cylinder 10 between the central gasket 10c and the intermediate gaskets 10a, 10b are in fluid communication with the inlets 9a, 9b and the side holes 10f, arranged beyond the intermediate gaskets 10a, 10b, are in fluid communication with the outlets 9c, 9b of the body 9.

The mutual position of the holes 10f, 10f1 and of the holes 16f is regulated by the pressure P1, P2 of the inflowing water which moves the piston 12 inside the hollow cylinder 10, facilitating a greater flow of water through the inlet which receives water at a greater pressure.

In particular, when the holes 16f and the holes 10f are positioned to increase the water inflow at a higher pressure, a base ring 10b is arranged to reduce a gap of the hole 16f through which the water flows towards a corresponding outlet 9d of the pressure balancer 8.

In other words, the pressure balancer operates as follows: the hot water is delivered through the hot water inlet 9a of the body 9, at a preset pressure P1 and the cold water is delivered through the cold water inlet 9b of the body 9, at a preset pressure P2, for example greater than P1, said hot and cold water flow through the central holes 10f of the hollow cylinder 10 and through the holes 16f of the piston 12, into the cavities 12a 12b of the piston and from these, under the force of the relative pressure, towards the side holes 10f1 and the outlets 9c, 9d of the body 9.

If P2>P1, the piston 12 slides in the hollow cylinder 10 to receive more cold water through the holes 10f of the hollow cylinder 10 and, consequently, the base ring 14b is arranged partially closing the side holes 10f1 through which the cold water flows towards the outlet 9d (in figure 3, the piston 12 moves from left to right) and, consequently, allows a greater flow of hot water through the side holes 10f1 corresponding to the outlet 9c. If the pressure P2 is much higher than P1, for example if P1=0, the side ring 14b of the piston 12 is arranged at total closure of the cold water outlet side holes 10fl, interrupting the communication of fluid between the cavity 12b of the piston and the holes 10fl of the hollow cylinder 10 corresponding to the outlet 9d.

Figure 3 schematically represents the pressure balancer 8 with the piston 12 centred with respect to the hollow cylinder 10, in cases where the hot water pressure is identical to the pressure P2 of cold water.

Preferably, the body 9 is made of synthetic material resistant to high temperatures, non-deformable, to prevent the formation of calcareous deposits while the hollow cylinder 10 and the piston 12 are made of stainless steel to obtain an ideal sliding and a high sensitivity to the pressure differences, as well as a considerable resistance to the impurities present in the water.

The outlets 9c and 9d of the body 9 of the pressure balancer 8 are connected to the inlets 5a and 5b of the mixer valve 5 for supplying water at temperature T1 and T2 and at an equivalent pressure PBIL and the outlet 5c of the mixer valve 5 supplies water at a temperature TM; the mixer valve 5 is regulated with considerable accuracy by the comparator 6 given that the pressure of the inflowing and outflowing hot water is constant.

Furthermore, provided for are a pair of temperature sensors T1 and T2, also referred to as inlet sensors, arranged upstream of the pressure balancer 8, in particular arranged directly at the pressure mixer inlets 2 and 3, and electrically connected to the comparator 6. The comparator 6, even before detecting the mixed water temperature TM, calculates, depending on the temperature values T1 and T2, an opening or closure of the mixer valve 5 required to obtain, downstream of the valve 5, a mixed water temperature TP and sends to the motorised means 7 a corresponding opening/closure command.

In other words, the comparator 6 advances the setting of the mixer valve 5 upon detection of the mixed temperature TM. Advantageously, the calculation of the opening/closure of the mixer valve 5 performed by the comparator according to the temperature values T1 and T2 makes the thermostatic mixer 1 particularly rapid at setting the temperature TM to the preset value TP.

Furthermore, such calculation is extremely accurate given that the hot and cold water pressures inflowing into the mixer valve are equivalent.

In particular, if the mixer valve 5 is set for an equivalent inflow of hot and cold water, the value of the temperature at the outlet of the valve 5 can be calculated as the mean of values T1 and T2. If the mixer valve is open to allow a flow of hot water equivalent to 1/N times the total flow and, consequently, a flow of cold water equivalent to (N-1)/N times such total flow N, the value of the temperature at the outlet of the valve 5 can be calculated through a formula of the type 1/N*T1 + (N-1)*T2.

A sensor arranged downstream of the outlet 5c of the mixer valve 5 and connected to the comparator 6, also referred to as outlet sensor, detects the mixed water temperature TM and sends it to the comparator 6, which, depending on the temperature values T1 and T2 received from the inlet sensors, the temperature value TM received from the outlet sensor and the temperature value TP received from the user interface, accurately regulates the opening/closure of the mixer valve 5.

Preferably, the inlet sensors and/or the outlet sensor are thermistors NTC which operate at a very wide temperature interval and are very easy to install and they do not require a particular measuring procedure.

The motorised means comprise, for example, a continuous current electrically-operated type of geared motor, operated by a respective comparator output power 6.

The mixer valve 5 intercepts the fluid depending on the angular movement of the stem 5e which is integrally joined in rotation with a respective joint with an electric motor rotation shaft. The electric motor actuates in rotation the second joint integral with the stem of the mixer valve 5.

According to the present invention, also provided for is a second flow rate control valve 15 actuatable electrically by the motorised means, for example a second electric motor 17 coupled to a stem 15e of the second valve 15 through a reduction motion mechanism like the one already described.

The flow rate control valve 15, arranged downstream of the mixer valve 5, receives, at the inlet, the water already mixed at the temperature TM and it is capable of regulating its flow rate water depending on the value of the angular movement of their stem 15e.

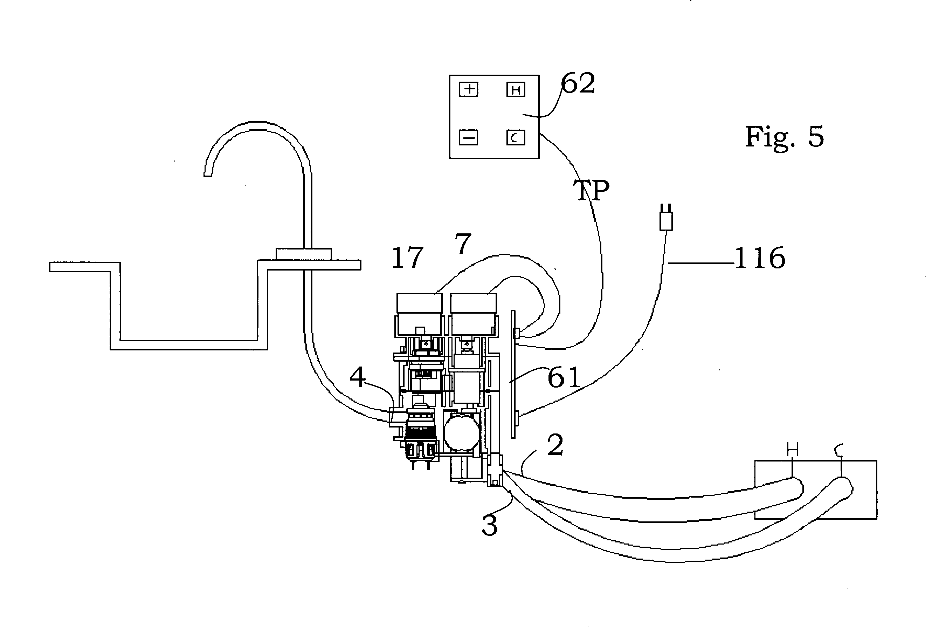

In figure 5 schematically represented is a thermostatic mixer according to the present invention, hydraulically connected through the hot and cold water inlets 2 and 3 and the mixed water outlet 4 and electrically supplied by a supply cable 116 connected to an electronic board 61.

In particular, the electronic board 61 comprises the comparator 6 and it is connected to a keyboard 62 through which the user can select the preset water temperature TP.

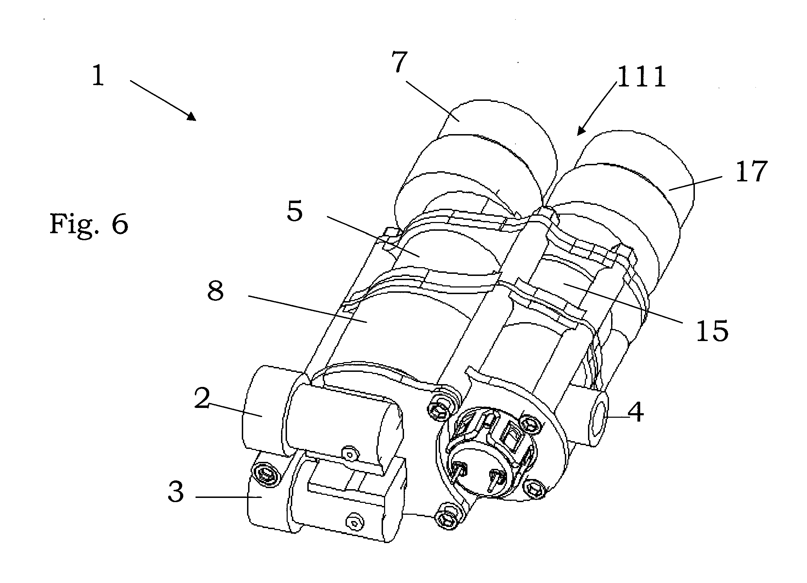

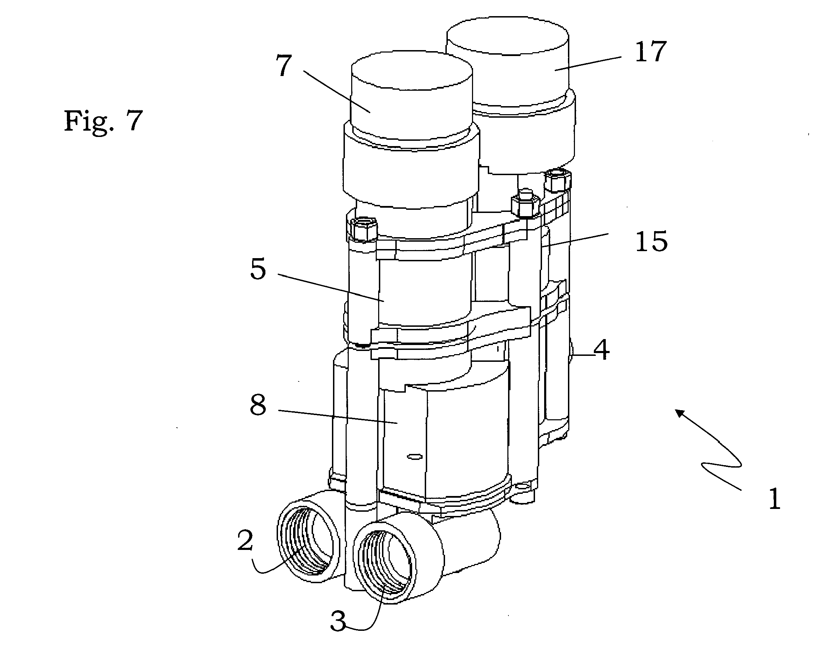

As clearly observable in figures 6 and 7, which represent the thermostatic mixer 1 in different perspective views according to the present invention, the pressure balancer 8, the motorised means 7 and 17 for operating the mixer valve 5 and the flow rate regulation valve 15, as well as the respective valves 5, 15 and the comparator 6, are enclosed in a monoblock 111 which can be mounted in an uniquely simple manner in a common bathroom or kitchen installation, connecting the inlets 2, 3 to the hot and cold water supply pipes and the outlet 4 directly to the tap and supplying the electronic board electrically 61.

Advantageously, the thermostatic mixer according to the present invention provides a distinctive coordination between the mechanical and electronic portions which cooperate to obtain quite an accurate regulation of the flow rate and temperature exiting from the mixer.

For example, an accurate control of the electronic temperature is obtained, maintaining the mixed water temperature TM at the preset temperature value TP through an electronic control of the electric motor which actuates the mixer valve, whose proper operation is not influenced by particular water inlet pressure or respective temperatures values.

Furthermore, the thermostatic mixer according to the present invention is capable of regulating the mixed water temperature substantially for any pressure and/or temperature value of the inflowing cold and hot water, and it is capable of performing such regulation in an extremely accurate manner, regulating the supply of the hot and cold water through the respective inlets by means of an electronically controlled opening of the mixer valve.

Advantageously, the mixer according to the invention regulates the mixer valve in a very rapid manner, even before the mixed water sensor detects the temperature TM of the mixed water, given that the comparator electronically controls the opening or the closure of the mixer valve depending on the hot and cold water temperature values detected upstream of the mixer valve itself, advancing the detection of the mixed temperature TM with its expected value TMA. Such expected value can be calculated in an extremely accurate manner given that the hot and cold water pressure is maintained constant by the pressure balancer.

## Claims

1. Thermostatic mixer (1) for uses in the plumbing industry, for example for showers and the like, comprising a hot water inlet (2) at a temperature T1, a cold water inlet (3) at a temperature (T2), a mixed water outlet (4) at a temperature (TM), **characterised in that** it comprises a comparator (6) between the mixed water temperature (TM) and a preset temperature value (TP), and a hot and cold water mixer valve (5), actuated electrically by the comparator (6), for maintaining the mixed water temperature (TM) equivalent to the preset temperature (TP).

2. Thermostatic mixer (1) according to claim 1 **characterised in that** it comprises a pressure balancer (8) interposed between the mixer inlets (2, 3) and the mixer valve (5), comprising separated hot and cold water inlets (9a, 9b), at respective inlet pressures P1 and P2, and separated hot and cold water outlets (9c, 9d) at a same pressure PBIL.

3. Thermostatic mixer (1) according to claim 1 **characterised in that** it comprises a mixed temperature sensor TM, also referred to as outlet sensor, arranged at the outlet (4) of the thermostatic mixer (1) and electrically connected to the comparator (6).

4. Thermostatic mixer (1) according to claim 1 **characterised in that** it comprises two temperature sensors T1 and T2, also said inlet sensors, arranged at the inlets of the thermostatic mixer (1) and electrically connected to the comparator (6).

5. Thermostatic mixer (1) according to claim 1 **characterised in that** it comprises a second flow rate regulation valve (15), arranged downstream of the mixer valve (5), receiving the mixed water at the inlet at a temperature TM and actuatable electrically to adjust the water flow rate through the outlet (4) of the thermostatic mixer (1).

6. Thermostatic mixer (1) according to claim 1 **characterised in that** said inlet sensors and/or said outlet sensor are NTC sensors.

7. Method for thermostatic mixing for showers and the like, comprising the steps of:
- receiving two separate hot water, at temperature T1, and cold water, at temperature T2 flows, and mixing the two flows into mixed water at temperature TM; **characterised in that** it comprises the steps of
- acquiring a digital signal indicating a temperature TP preset by a user;
- comparing the mixed water temperature TM and the user selected temperature TP;
- electronically controlling a hot and cold water mixer valve, to maintain the mixed water temperature TM identical to the preset value TP.

8. Method for mixing according to claim 7 **characterised in that** it comprises the steps of:
- balancing a hot water pressure P1 and a cold water pressure P2 at the inlet, to a pressure value PBIL, said balancing step being performed before mixing the two flows into mixed water at temperature TM.

9. Method for mixing according to claim 8 **characterised in that** it comprises the steps of
- detecting in said separated hot and cold water flows, the respective temperatures T1 and T2, said comparing step being performed on an expected value TMA of the mixed water calculated according to said measured values T1 and T2 and an opening of the mixer valve.

10. Method according to claim 9 **characterised in that** said expected value TMA is calculated through a mathematical formula of the type 1/N*T1 + (N-1)*T2, where N is the total flow at the exit from the mixer valve, 1/N is a measurement of the inflowing hot water flow and N-1/N is a measurement of the inflowing cold water flow.
